# EUROPEAN PATENT SPECIFICATION

(11) **EP 3 901 105 B1**
(45) Date of publication and mention of the grant of the patent: **10.12.2025**
(21) Application number: 19900996.0
(22) Date of filing: 11.10.2019
(51) Int. Cl.: C02F 1/469, C02F 1/461

(54) **METHOD FOR MANUFACTURING COMPOSITE CAPACITIVE DEIONIZATION ELECTRODE**
VERFAHREN ZUR HERSTELLUNG EINER KAPAZITIVEN ENTIONISIERENDEN VERBUNDELEKTRODE
PROCÉDÉ DE FABRICATION D'ÉLECTRODE DE DÉSIONISATION CAPACITIVE COMPOSITE

(30) Priority: 17.12.2018 KR 20180163531
(43) Date of publication of application: 27.10.2021
(73) Proprietor: Siontech Co., Ltd., Daejeon 34025 (KR); Kyungdong Navien Co., Ltd., Pyeongtaek-si, Gyeonggi-do (KR)
(72) Inventor: KANG, Kyung Seok, Daejeon 34125 (KR); SON, Won Keun, Daejeon 34330 (KR); KIM, Mi Yang, Daejeon 35245 (KR); LEE, Kyung Han, Daejeon 34304 (KR)
(74) Representative: dompatent
(86) International application number: PCT/KR2019/013378
(87) International publication number: WO 2020/130310

(56) References cited:
- WO-A1-2017/137748
- KR-A- 20150 118 771
- KR-A- 20160 120 132
- KR-A- 20170 122 491
- KR-A- 20180 001 915
- KR-A- 20180 001 915
- US-A1- 2016 207 800
- YANG SEUNGCHEOL ET AL: "Green fabrication of pore-filling anion exchange membranes using R2R processing", JOURNAL OF MEMBRANE SCIENCE, vol. 584, 3 May 2019 (2019-05-03), pages 181 - 190, XP085694910, ISSN: 0376-7388, DOI: 10.1016/J.MEMSCI.2019.04.075

## Description

### [Technical Field]

The present invention relates to a manufacturing method of a composite capacitive deionization electrode having a new structure which may increase deionization efficiency and have excellent mechanical and chemical resistance.

### [Background Art]

A lot of research on capacitive deionization (CDI) electrodes having an ion exchange membrane layer has been carried out by the inventors of the present invention. For example, technology in which an ion exchange membrane layer is formed by coating a carbon electrode layer (active layer) with slurry including ion exchange resin powder is disclosed in Korean Patent Registration No. 10-1410642(Registration No. June 17, 2014).

However, in this Patent, when the carbon electrode layer of an electrode sheet is coated with the slurry, a binder and the like in the slurry permeate into pores of the carbon electrode layer and reduce the number of the pores, and thus, deionization efficiency may be lowered and environmentally friendliness is poor due to use of an excessive amount of an organic solvent to manufacture the slurry during a process.

Further, the carbon electrode layer provided with the ion exchange membrane layer formed thereon is still poor in terms of mechanical properties, such as bending characteristics, strength, etc., and chemical properties, and thus causes problems, such as breakage, secession, etc., and has a shortened lifespan due to characteristics of a fluid required to be deionized.

### [Related Art Document]

### [Patent Document]

(Patent Document 0001) Korean Patent Registration No. 10-1410642(Registration No. June 17, 2014)

US 2016207800A1 discloses a deionization composite electrode comprising:
a porous substrate having fine pores;
an ion exchange membrane that is formed by electrospraying an ion exchange solution on one surface of the porous substrate; and
conductive films that are formed on all surfaces of the porous substrate.

### [Disclosure]

### [Technical Problem]

Therefore, the present invention has been made in view of the above problems, and it is an object of the present invention to provide a manufacturing method of a composite capacitive deionization electrode having a new structure which has high deionization efficiency.

It is another object of the present invention to provide a manufacturing method of a composite capacitive deionization electrode which has excellent mechanical properties, such as bending strength, torsional resistance, elasticity, impact strength, etc., and excellent chemical resistance, and a composite capacitive deionization electrode and assembly manufactured thereby.

It is another object of the present invention to provide a manufacturing method of a composite capacitive deionization electrode which has a new structure using an in-line stacking process, and a composite capacitive deionization electrode and assembly manufactured thereby, and simultaneously to provide a composite capacitive deionization electrode and assembly manufactured by a different production method in which assembly (or combination) is performed after production, such as a method for performing assembly after batch production.

It is another object of the present invention to provide a manufacturing method of a composite capacitive deionization electrode which may remarkably reduce the amount of an organic solvent used to manufacture ion exchange resin layers and improve environmental friendliness, and a composite capacitive deionization electrode and assembly manufactured thereby.

It is yet another object of the present invention to provide a manufacturing method of a composite capacitive deionization electrode which may remarkably improve deionization efficiency in spite of use of low-priced microporous membranes and thus have advantages in commercialization and mass-production and be economically feasible, and a composite capacitive deionization electrode and assembly manufactured thereby.

### [Technical Solution]

The present invention is described by the independent claims. Preferred embodiments are described as dependent claims.

In accordance with the present invention, the above and other objects can be accomplished by the provision of a manufacturing method of a composite capacitive deionization electrode, the manufacturing method comprising the steps of:
a) preparing composite microporous membranes by forming ion exchange resin layers on surfaces of microporous membranes, wherein each composite microporous membrane includes a first ion exchange resin layer and a second ion exchange resin layer formed on both surfaces of the microporous membranes respectively, wherein the first ion exchange resin layer and the second ion exchange resin layer are identical to each other or different from each other;
b) preparing a second unit comprising the composite microporous membranes and a spacer by forming the composite microporous membrane, prepared in the step, on one surface of the spacer, wherein the second unit prepared in step b) includes the composite microporous membranes formed on both surfaces of the spacer; and
c) stacking and combining an electrode sheet on one surface of the second unit, wherein the electrode sheet comprises a current collector and a carbon electrode layer formed on at least one surface of the current collector, wherein a composite microporous membrane of the second unit is stacked on and compressed onto the carbon electrode layer.

In the step a), the composite microporous membranes may be prepared by dipping the microporous membranes unwound from microporous membrane winding rolls into ion exchange resin dissolving tanks configured to contain an ion exchange resin solution therein so as to be impregnated with the ion exchange resin solution.

The electrode sheet may include a current collector and a carbon electrode layer formed on at least one surface of the current collector, and the composite microporous membrane may be stacked on and compressed onto the carbon electrode layer.

The composite microporous membranes may be configured such that an ion exchange resin of the ion exchange resin layers formed on both surfaces of the microporous membranes permeates into pores in the microporous membranes so as to connect the ion exchange resin layers formed on both surfaces of the microporous membranes to each other through the pores.

The manufacturing method may further include the step of drying a product prepared in a previous step, after the step a) .

The microporous membranes may be polyolefin-based, cellulose-based or organic and inorganic hybrid microporous membranes.

The polyolefin-based microporous membranes may include at least two selected from the group consisting of high-density polyethylene, linear low-density polyethylene, low-density polyethylene, ultra-high-molecular-weight polyethylene, polypropylene and derivatives thereof.

The microporous membranes may have a thickness of 1 to 500 µm, and the microporous membranes may have porosity of 10 to 95 and a pore size of 0.01 to 50 µm and be prepared in a fibrous form or a membrane form.

In accordance with yet another aspect of the present invention, there is provided a composite capacitive deionization electrode including an electrode sheet, and composite microporous membranes formed on both surfaces of the electrode sheet, wherein each of the composite microporous membranes includes a microporous membrane, and a first ion exchange resin layer and a second ion exchange resin layer formed on both surfaces of the microporous membrane, respectively.

The first ion exchange resin layer and the second ion exchange resin layer may be identical to each other, or may be different from each other.

A plurality of first units, each first unit including the electrode sheet and the composite microporous membranes formed thereon, may be alternately stacked, and the composite capacitive deionization electrode may further include spacers located between the first units and provided with a flow path formed therein.

Disclosed herein is also a composite capacitive deionization assembly including spacers provided with a flow path formed therein, anda composite microporous membrane formed on one surface of each of the spacers, wherein the composite microporous membrane includes a microporous membrane, and a first ion exchange resin layer and a second ion exchange resin layer formed on both surfaces of the microporous membrane, respectively.

### [Advantageous effects]

A composite capacitive deionization electrode and an assembly comprising one or more composite capacitive deionization electrodes manufactured according to the present invention may have high deionization efficiency, excellent mechanical properties, such as bending strength, torsional resistance, elasticity, impact strength, etc., and excellent chemical resistance, and the composite capacitive deionization assembly may be formed by stacking a smaller number of capacitive deionization electrodes having high deionization efficiency per unit volume and may thus have a small volume.

Further, the manufacturing method of the composite capacitive deionization electrode according to the present invention may remarkably reduce the amount of an organic solvent used to manufacture ion exchange resin layers, may improve environmental friendliness, may remarkably improve deionization efficiency in spite of use of low-priced microporous membranes and thus have advantages in commercialization and mass-production and be economically feasible, may not cause process complicatedness due to execution through a single process, may facilitate maintenance, repair and management, and may exhibit excellent reproducibility of products which are manufactured.

### [Description of Drawings]

FIG. 1 is a cross-sectional view of a composite capacitive deionization electrode manufactured according to the method of the present invention.
FIG. 2 is a partially enlarged view of FIG. 1.
FIG. 3 is a cross-sectional view of an other composite capacitive deionization electrode manufactured according to the method of the present invention.
FIG. 4 is a schematic cross-sectional view illustrating a configuration method of the composite capacitive deionization electrode outside the scope of the present invention.
FIG. 5 is a schematic cross-sectional view illustrating another configuration method of the composite capacitive deionization electrode according to the present invention.
FIG. 6 is a schematic view of a monopolar composite capacitive deionization apparatus using the composite capacitive deionization electrode manufactured according to the method of the present invention.
FIG. 7 is a schematic view of a bipolar composite capacitive deionization apparatus using the composite capacitive deionization electrode manufactured according to the method of the present invention.
FIG. 8 is a schematic view illustrating some of steps a manufacturing method of the composite capacitive deionization electrode according to the present invention.

### [Mode for Invention]

Hereinafter, an exemplary embodiment of a composite capacitive deionization electrode will be described in detail with reference to the accompanying drawings.

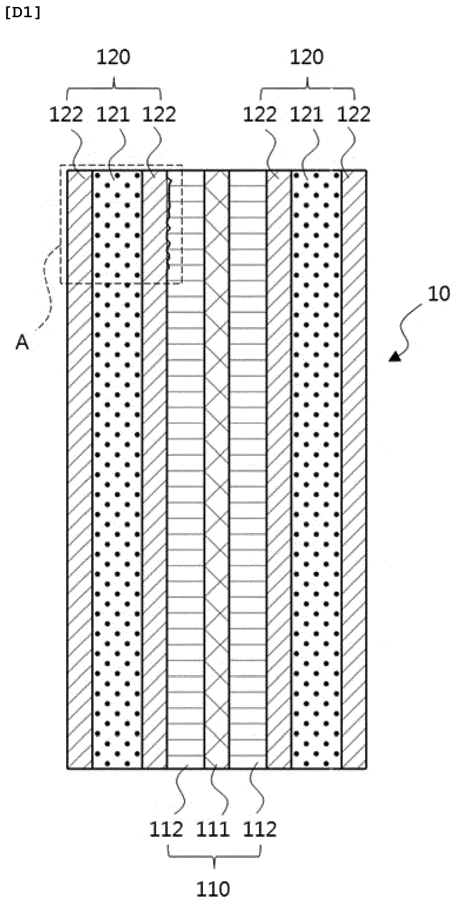

FIG. 1 schematically illustrates a composite capacitive deionization electrode manufactured according to the method of the present invention.

As shown in FIG. 1, the composite capacitive deionization electrode includes an electrode sheet 11C and composite microporous membranes 120, and the composite capacitive deionization electrode including the electrode sheet 110 and the composite microporous membranes 120 is referred to as a first unit 10 for convenience.

The electrode sheet 110 is connected to a power supply and serves as an electrode, as shown in FIG. 1, the electrode sheet 110 may include a current collector 111 and carbon electrode layers 112.

The current collector 111 shown in FIG. 1 serves as a kind of supporter configured to form the carbon electrode layers 112 thereon and an electrode, simultaneously. The reason why the current collector 111 is used is to supplement poor durability occurring when the electrode sheet 110 includes only the carbon electrode layer 112 because of characteristics of carbon.

The current collector 111 may be formed of a conductive material which may allow an electric field to be uniformly distributed throughout the current collector 111, when current is applied thereto, and the current collector 111 may, for example, include one or at least two selected from the group consisting of aluminum, nickel, copper, titanium, iron, stainless steel and graphite. However, the current collector may include various known materials, without being limited thereto, with reference to various documents. Further, the current collector may have various form, such as a plate form, a network form, a lattice form, a fibrous form, etc., without being limited thereto.

The carbon electrode layers 112 serve to improve ion adsorption/desorption efficiency, and may be formed of any carbon-based electrode material. The carbon electrode layers 112 may include one or at least two carbon-based materials selected from the group consisting of activated carbon particles, carbon fibers, carbon nano-tubes and graphite particles.

Further, the carbon electrode layers 112 may further include durability/weatherability enhancing materials which may improve deionization efficiency as the carbon electrode. For example, the carbon electrode layers 112 may be manufactured by applying slurry including a carbon-based material, a binder and an organic solvent to the current collector into a membrane form and then drying the slurry. In some cases, an electrode active material may be added to the slurry so as to increase a specific surface area and capacitance. However, this is merely one example and, in addition,various other materials may be added.

As shown in FIG. 1, the composite microporous membrane 120 may be formed on each of both surfaces of the electrode sheet 110, and one composite microporous membrane 120 may include a microporous membrane 120 and ion exchange resin layers 122.

The microporous membrane 121 means a thin film in which pores are formed, and the composite microporous membrane 120 includes the ion exchange resin layers 122 formed on both surfaces of the microporous membrane 121 and may thus be improved in mechanical properties, such as bending strength, torsional resistance, impact resistance, elasticity, etc., and chemical resistance.

The microporous membrane 121 may be a polymer microporous membrane, for example, a polyolefin-based polymer microporous membrane, and more particularly, may include at least two selected from the group consisting of high-density polyethylene, linear low-density polyethylene, low-density polyethylene, ultra-high-molecular-weight polyethylene, polypropylene and derivatives thereof. However, in the present invention, the microporous membrane 121 is not limited to the above-described materials, and may be a cellulose-based microporous membrane, or may be an organic and inorganic hybrid microporous membrane including a mixture of a polymer and an inorganic material so as to increase durability of the microporous membrane 121 or for other purposes.

Further, the microporous membrane 121 may have a thickness of 1 to 500 µm and, for example, may have a thickness of 5 to 30 µm so as to have sufficient mechanical properties, such as bending characteristics, impact strength, etc.

The ion exchange resin layers 122 mean layers coated with an ion exchange resin which purifies a fluid to be purified by adsorbing anions or cations when the fluid to be purified passes through the ion exchange resin layers 122, and the ion exchange resin is an insoluble synthetic resin which may perform ion exchange. Ion exchange resins may be classified into cation exchange resins and anion exchange resins, and the ion exchange resin layers 122 formed on both surfaces of one microporous membrane 121 may be formed of one kind of cation exchange resins and anion exchange resins.

In more detail, the ion exchange resin layers 122 mean cation exchange resin layers (cation exchange membranes) or anion exchange resin layers (anion exchange membranes).

The cation exchange resin layer may include any material which selectively adsorbs cations among cations and anions, and the anion exchange resin layer may include any material which selectively adsorbs anions among cations and anions. For example, the ion exchange resin layer may be manufactured through the above-described method using an ion exchange resin solution, prepared by dissolving a polymer resin including a cation exchange group or an anion exchange group in an organic solvent, i.e., including the polymer resin and the organic solvent. The polymer resin including the cation exchange group may, for example, be a polymer resin including a functional group including one or at least two selected from the group consisting of a sulfonic acid group (-SO3H), a carboxylic acid (-COOH), a phosphonic group (-PO3H2), a phosphinic group (-HPO2H), an arsonic group (-AsO3H2) and a selenonic group (-SeO3H). The polymer resin including the anion exchange group may, for example, be a polymer resin including a functional group including one or at least two selected from the group consisting of quaternary ammonium salts(-NH3), primary to tertiary amines (-NH2, -NHR and -NR2), a quaternary phosphonium group (-PR4), and a tertiary sulfonium group (-SR3). However, these polymer resins are merely examples, the present invention is not limited thereto and various other polymer resins known in various documents may be used.

In this example, the same kind of exchange resin may be formed on both surfaces of one microporous membrane 121, but the composite microporous membranes 120 formed on both surfaces of the electrode sheet 110 may exchange the same kind of ions or different kinds of ions, and thereby, the composite capacitive deionization electrode according to the present invention may be used as a bipolar composite capacitive deionization electrode or used as a monopolar capacitive deionization electrode. This will be described later.

The ion exchange resin layers 122 formed on both surfaces of one microporous membrane 121 may be connected to each other by allowing the ion exchange resin forming the respective ion exchange resin layers 122 to permeate into the pores of the microporous membrane 121.

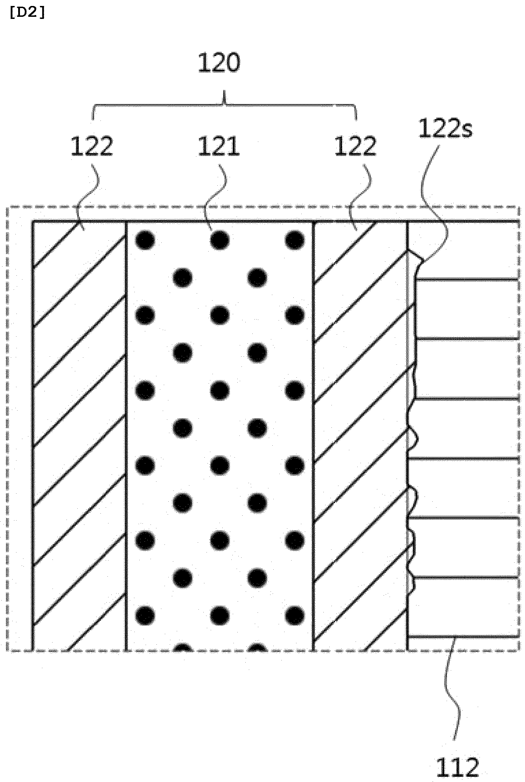

FIG. 2 is an enlarged view of portion A of FIG. 1.

As shown in FIG. 2, when the ion exchange resin layer 122 of the composite microporous membrane 120 is adsorbed onto the surface of the carbon electrode layer 112 of the electrode sheet 110, the ion exchange resin of the ion exchange resin layer 122 permeatesand diffuses into the carbon electrode layer 112, thus forming an ion exchange resin permeation layer 122s. However, the ion exchange resin permeation layer 122s causes less permeation of the ion exchange resin than the conventional method in which the ion exchange resin solution in a slurry form is directly applied to the surfaces of the carbon electrode layer 112, and thus prevents the ion exchange resin solution from closing the pores of the carbon electrode layer 112, thereby facilitating collection of ions and thus exhibiting excellent deionization performance when the composite capacitive deionization electrode according to the present invention is operated. The above-describedion exchange resin permeation layer 122s will be described in more detail when a method for manufacturing the composite capacitive deionization electrode according to one embodiment of the present invention is described.

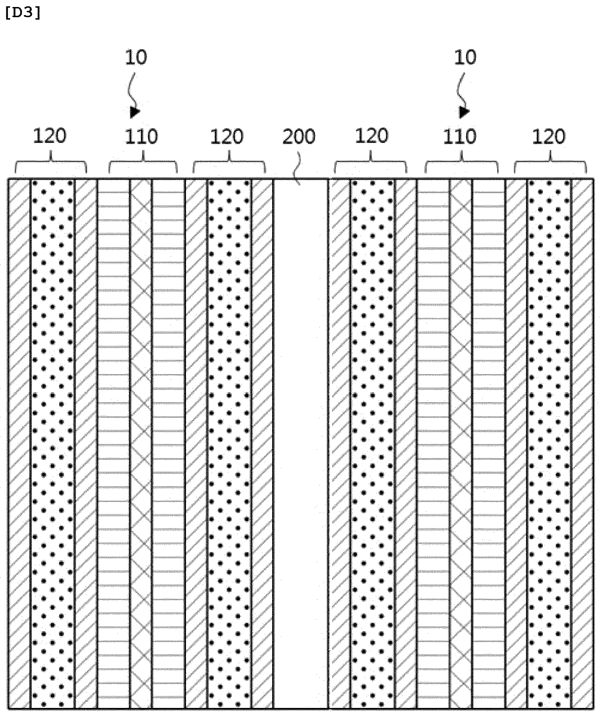

FIG. 3 is a cross-sectional view of a composite capacitive deionization electrode manufactured according to the method of the present invention.

As shown in FIG. 3, in the composite capacitive deionization electrode according to the second embodiment of the present invention, a plurality of the above-described first units 10 may be disposed, spacers 200 are located between the first units 10, and the first units 10 and the spacers 200 may be bonded.

The first units 10 and the spacer 200 may be bonded through proper heat treatment and compression, because the outermost layers of the first units 10 are the ion exchange resin layers 122.

The spacer 200 serves to combine different first units 10 with each other in the state in which the first units 10 are spaced apart from each other, and a flow path is formed in the spacer 200 so that the fluid to be purified may enter the flow path. That is, the spacer 200 has a lattice frame structure in which the flow path is formed, and the fluid may be purified through ion exchange with the composite microporous membranes 120 at both sides of the spacer 200, while flowing from one side to the other side of the spacer 200 (from the upper part to the lower part or from the lower part to the upper part in FIG. 3).

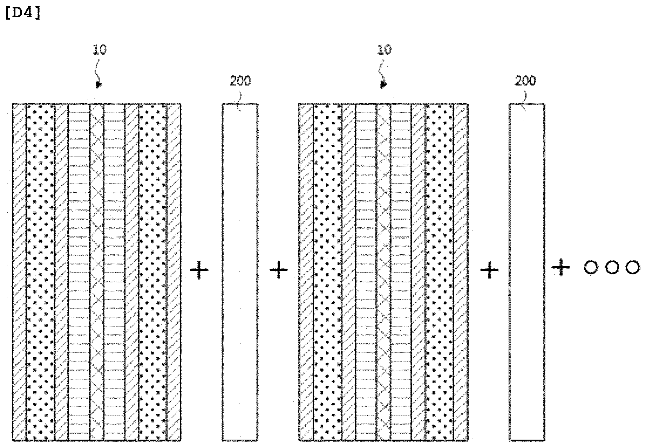

FIG. 4 schematically illustrates one method for extending the composite capacitive deionization electrode outside the scope of the present invention.

As shown in FIG. 4, the composite capacitive deionization electrode may be extended by repeatedly stacking the first units 10 and the spacers 200.

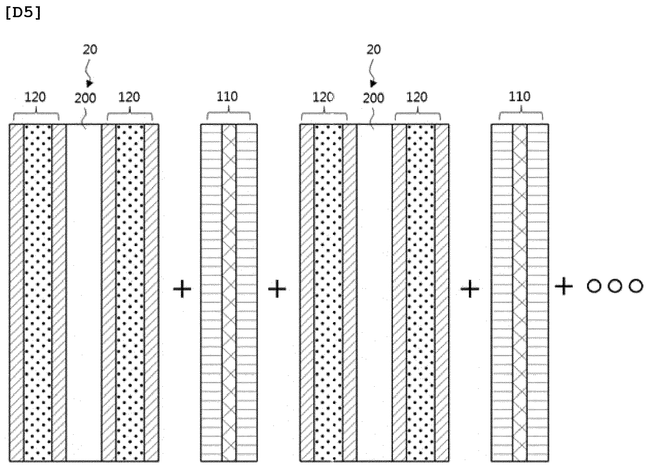

FIG. 5 schematically illustrates a method for extending the composite capacitive deionization electrode according to the present invention.

As shown in FIG. 5, the composite capacitive deionization electrode according to the present invention may be extended by repeatedly stacking second units 20 and the electrode sheets 110.

The second unit 20 is a composite capacitive deionization assembly including the composite microporous membranes 120 formed on both surfaces of the spacer 200.

As shown in FIG. 5, the second unit 20 by itself may not serve as a composite capacitive deionization electrode, but the second unit 20 and the electrode sheet 110 may be stacked and combined with each other so as to serve as a deionization electrode and, because the second units 20 and the electrode sheets 110 are first formed and then are stacked and combined with each other, the composite capacitive deionization electrode may be easily manufactured.

Because the ion exchange resin layers 122 are formed on both surfaces of the spacer 200 included in each of the second units 20 and then the electrode sheets 110 and the second units 20 are stacked, ion exchange resin permeation layers 122s having a smaller area than the ion exchange resin permeation layer 122s illustrated with reference to FIG. 2 are formed and thus close a smaller number of pores in the carbon electrode layers 112 of the electrode sheet 110, thereby exhibiting excellent deionization efficiency.

The second units 20 and the carbon electrode layers 112 may be bonded through the same bonding method between the first units 10 and the spacers 20.

The composite microporous membranes 120 formed on both surfaces of the spacer 200 may be identical to or be different from each other, and the second unit 20 may include the composite microporous membrane 120 on one surface of the spacer 200.

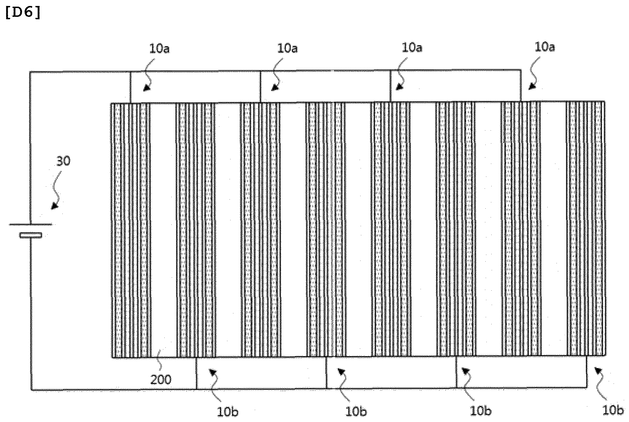

FIG. 6 is a schematic view of a monopolar composite capacitive deionization apparatus using the composite capacitive deionization electrode manufactured according to the present invention.

As shown in FIG. 6, the monopolar composite capacitive deionization apparatus using the composite capacitive deionization electrode according to the second embodiment of the present invention may have a structure in which first cation units 10a, in which the ion exchange resin layers 122 of the composite microporous membranes 120 formed on both surfaces of the electrode sheet 110 are formed of cation exchange resins, and first anion units 10b, in which the ion exchange resin layers 122 of the composite microporous membranes 120 formed on both surfaces of the electrode sheet 110 are formed of anion exchange resins, are alternately stacked as the first units.

That is, as shown in FIG. 6, the monopolar composite capacitive deionization apparatus may be configured such that the respective elements are stacked in order of the first cation unit 10a, the spacer 200, the first anion unit 10b and the spacer 200, and may be used in the state in which the first cation units 10a are connected to a positive pole of a power supply 30 in parallel and the first anion units 10b are connected to a negative pole of the power supply 30in parallel.

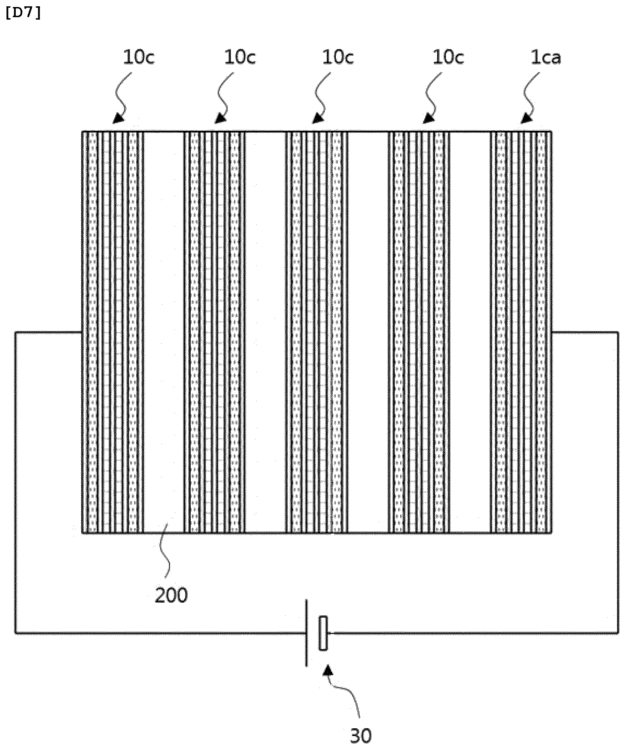

FIG. 7 is a schematic view of a bipolar composite capacitive deionization apparatus using the composite capacitive deionization electrode manufactured according to the method of the invention.

As shown in FIG. 7, the bipolar composite capacitive deionization apparatus using the composite capacitive deionization electrode be configured such that first bipolar units 10c, in which the ion exchange resin layers 122 of the composite microporous membranes 120 formed on both surfaces of the electrode sheet 110 are formed of different types of ion exchange resins, are stacked as the first units.

For example, the first bipolar units 10c may be configured such that anion exchange resin layers are formed at the left of the electrode sheet 110 and cation exchange resin layers are formed at the right of the electrode sheet 110 and, as shown in FIG. 7, the monopolar composite capacitive deionization apparatus may be configured such that a plurality of the same kind of first bipolar units 10c is connected in series, and the outermost first bipolar units 10c are connected to the positive pole and negative pole of the power supply 30, respectively.

Hereinafter, a manufacturing method of the composite capacitive deionization electrode according to the first embodiment of the present invention will be described in detail with reference to the accompanying drawings. The manufacturing method of the composite capacitive deionization electrode according to the first embodiment of the present invention is the manufacturing method of the above-described composite capacitive deionization electrode, and thus, the same reference numerals or symbols in different drawings indicate similar or identical items.

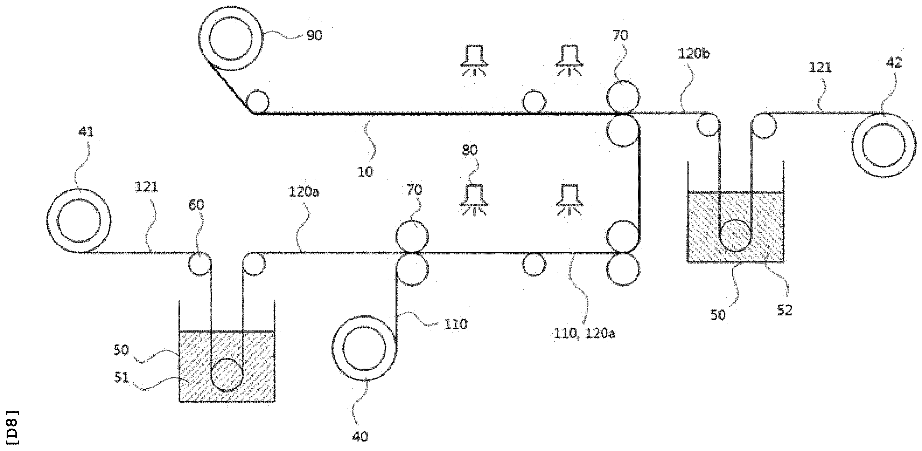

FIG. 8 is a schematic view illustrating some of steps the manufacturing method of the composite capacitive deionization electrode according to the first embodiment of the present invention.

The manufacturing method of the composite capacitive deionization electrode according to the first embodiment of the present invention may include steps a), b), c) and d).

In step a), the composite microporous membrane 120 is prepared by forming the ion exchange resin layers122 on both surfaces of the microporous membrane 121.

Although there are various methods for preparing the composite microporous membrane 120 by forming the ion exchange resin layers 122 on both surfaces of the microporous membrane 121 in step a), in this embodiment, a method, in which the microporous membrane 121 is dipped into an ion exchange resin dissolving tank 50 configured to contain an ion exchange resin solution 51 so as to be impregnated with the ion exchange resin solution 51, is used, as shown in FIG. 8.

When step a) is described in more detail with reference to FIG. 8, a first microporous membrane winding roll 41, on which the microporous membrane 121 is wound, is rotated to unwind the microporous membrane 121, and the unwound microporous membrane 121 is dipped into the ion exchange resin dissolving tank 50,in which the ion exchange resin solution 51 is contained, and then discharged, thereby being capable of preparing a first composite microporous membrane 120a including the ion exchange resin layers 122 formed on both surfaces of the microporous membrane 121.

In step a), a second composite microporous membrane 120b may be prepared using a second microporous membrane winding roll 42 and another exchange resin dissolving tank 50 configured to contain the ion exchange resin solution 51 thereinusing the same method as the first composite microporous membrane 120a.

The first composite microporous membrane 120a and the second composite microporous membrane 120b may include the same kind of or different kinds of ion exchange resin layers 122 so as to adsorb the same kind of ions or different kinds of ions.

In step b), the first unit 10 is prepared by forming the first composite microporous membrane 120a and the second composite microporous membrane 120b on both surfaces of the electrode sheet 10 and, as shown in FIG. 8, the first unit 10 may be formed by forming the first composite microporous membrane 120a on one surface of the electrode sheet 110 unwound from an electrode sheet winding roll 40 using squeeze rolls 70, and then forming the second composite microporous membrane 120b on the other surface of the electrode sheet 110 using other squeeze rolls 70.

While, in order to form the conventional ion exchange resin layer having a desired thickness, the electrode sheet 110 is coated with an amount of an ion exchange resin solution corresponding to the desired thickness and thus the conventional method is not effective due to a large amount of the ion exchange resin solution consumed, in the method including step a) and b) according to the present invention, the composite microporous membranes 120 are prepared by forming the ion exchange resin layers 122 on both surfaces of the microporous membranes 121 by dipping the microporous membranes 121 into the ion exchange resin dissolving tank 50 and is compressed onto the surfaces of the electrode sheet 110 using the squeeze rolls 70 and thus the ion exchange resin layers 122 may maintain a constant thickness and the amounts of the ion exchange resin solution and the organic solvent consumed may be remarkably reduced.

Further, while the ion exchange resin layers are conventionally formed by directly coating the carbon electrode layer 112 of the electrode sheet 110 with the ion exchange resin solution in the slurry form and thus the ion exchange resin solution is deeply diffused into the carbon electrode layer 112 and the adsorption surface area of the carbon electrode layer 112 per unit area is reduced, in the method according to the present invention in which the composite microporous membranes 120 are first prepared and then bonded to the electrode sheet 110, deep diffusion of the ion exchange resin solution into the carbon electrode layer may be prevented.

Because the electrode sheet 110 used in step b) includes the current collector 111 and the carbon electrode layers 112 formed on both surfaces of the current collector 111, as shown in FIG. 1, the composite microporous membranes 121 are compressed onto the surfaces of the electrode sheets 110 by the squeeze rolls 70 in step b), thereby being capable of forming the structure shown in FIG. 2.

As shown in FIG. 8, in order to transfer the electrode sheet 110 or the microporous membranes 121 in steps a) and b), a plurality guide rolls 70 may be used.

The first unit 10 finally prepared instep b) may be wound on an electrode winding roll 90, and may be cut to a length desired to be used after step b).

Step c) is performed after step b) and, in step c), the first unit 10 is formed on one surface of the spacer 200. Because the ion exchange resin layer 122 serving as the outermost layer of the first unit 10 is formed of a resin and is thus adhesive, the spacer 200 and the first unit 10 are bonded by performing post-treatment, such as heat-treatment, after compression of the first unit 10.

In step d), another first unit 10 prepared by steps a) and b) is formed on a remaining surface, i.e., the other surface, of the spacer 200 through the same method as or a different method from the method used in step c).

The above-described process is a manufacturing method of the composite capacitive deionization electrode by combining the first units 10 and the spacers 200 shown in FIG. 4.

Hereinafter, a manufacturing method of the composite capacitive deionization electrode shown in FIG. 5, i.e., a manufacturing method of the composite capacitive deionization electrode according to the second embodiment of the present invention by bonding the second units 20 and the electrode sheets 10, will be described in detail.

The manufacturing method of the composite capacitive deionization electrode according to the second embodiment of the present invention includes steps a), b) and c).

In step a), the composite microporousmembranes are prepared by forming the ion exchange resin layers on both surfaces of the microporous membranes, and step a) may be the same as the step of manufacturing the composite microporous membranes using the first microporous membrane winding roll 41, the second microporous membrane winding roll 42 and the ion exchange resin dissolving tanks 50 shown in FIG. 8.

In step b), the second unit including the composite microporous membrane and the spacer is prepared by forming the composite microporous membrane prepared in step a) on one surface of the spacer. The second unit prepared in step b) may include the composite microporous membrane formed on one surface of the spacer, or may include the composite microporous membranes formed on both surfaces of the spacer.

In step b), the second unit may be prepared by stacking the composite microporous membrane on one surface of the spacer and then performing compression or heat-treatment.

In step c), the electrode sheet is formed on one surface of the second unit prepared in step b), and the second unit and the electrode sheet may be stacked through designated heat-treatment or compression.

The above-described manufacturing methods of the composite capacitive deionization electrode according to the first and second embodiments of the present invention may further include step e) drying a product prepared in the previous step, after step a) preparing the composite microporous membranes 120. In step e), drying of the product may be performed through various methods. The drying apparatuses 80 shown in FIG. 8 may be, for example, hot air dryers, ultraviolet/infrared lamps, etc.

The above-described manufacturing methods of the composite capacitive deionization electrode according to the first and second embodiments of the present invention may be executed through an in-line continuous process line, thereby being capable of increasing productivity, facilitating mass-production, realizing process simplification and facilitating maintenance and repair of equipment. However, the manufacturing method of the composite capacitive deionization electrode according to the present invention is not limited to the in-line continuous process line, and some parts of the deionization electrode may be manufactured in advance and then the remining parts may be assembled (or combined) therewith.

In the manufacturing methods of the composite capacitive deionization electrode according to the first and second embodiments of the present invention, the microporous membrane 121 used in step a) may be a polyolefin-based microporous membrane, and more particularly, may include at least two selected from the group consisting of high-density polyethylene, linear low-density polyethylene, low-density polyethylene, ultra-high-molecular-weight polyethylene, polypropylene and derivatives thereof.

Further, the microporous membrane 121 may have a thickness of 1 to 500 µm, and preferably, may have a thickness of 5 to 30 µm so as to have sufficient mechanical properties, such as bending characteristics, impact strength, etc.

In the above-described manufacturing methods of the composite capacitive deionization electrode according to the first and second embodiments of the present invention, the composite microporous membrane 120 may be configured such that the ion exchange resin layers 122formed on both surfaces of the microporous membrane 121 areconnected to each other by allowing the ion exchange resin forming the respective ion exchange resin layers 122 to permeate into the pores of the microporous membrane 121.

The microporous membrane may be a microporous membrane in a continuous phase which has a relatively large total pore volume corresponding to porosity of 10 to 95%, and the microporous membrane is combined with the electrode sheet so as to improve mechanical properties, such as bending characteristics, elasticity, strength, impact resistance, etc. Therefore, the manufactured electrode may also have excellent resistance to external impact or torsion andexcellent mechanical properties, such as impact strength or elasticity. Further, because the microporous membrane mainly uses a polyolefin-based resin, as described above, the microporous membrane has excellent chemical durability, is not damaged due to contact with a deionizing solution of an acid or a base and may thus be used for a long period of time.

That is, a capacitive deionization electrode manufactured according to the method of the present invention may have excellent mechanical properties and excellent chemical properties in spite of a thin thickness thereof, may be low-priced, and may maintain initial deionization performance even though it is used for a long period of time.

The size (diameter) of pores formed in the microporous membrane may be 0.01 to 50 µm, without being limited thereto. Further, the microporous membrane may have various forms, such as a fibrous form or a membrane form.

Although the exemplary embodiments of the present invention have been disclosed for illustrative purposes, those skilled in the art will appreciate that various modifications, additions and substitutions are possible, without departing from the scope of the invention as defined in the accompanying claims.

### [Description of Reference Numerals and Marks]

10: first unit 10a: first cation unit
10b: first anion unit 10c: first bipolar unit
20: second unit 30: power supply
40: electrode sheet winding roll
41: first microporous membrane winding roll 42: second microporous membrane winding roll
50: ion exchange resin dissolving tank 51: ion exchange resin solution
60: guide roll 70: squeeze roll
80: drying apparatus 90: electrode winding roll
110: electrode sheet
111: current collector 112: carbon electrode layer
120: composite microporous membrane
121: microporous membrane 122: ion exchange resin layer
122s: ion exchange resin permeation layer
200: spacer

## Claims

1. A manufacturing method of a composite capacitive deionization electrode, the manufacturing method comprising the steps of:
a) preparing composite microporous membranes (120) by forming ion exchange resin layers (122) on surfaces of microporous membranes (121), wherein each composite microporous membrane (120) includes a first ion exchange resin layer (122) and a second ion exchange resin layer (122) formed on both surfaces of the microporous membranes (121) respectively, wherein the first ion exchange resin layer (122) and the second ion exchange resin layer (122) are identical to each other or different from each other;
b) preparing a second unit (20) comprising the composite microporous membranes (120) and a spacer (200) by forming the composite microporous membrane (120), prepared in the step a), on one surface of the spacer (200), wherein the second unit (20) prepared in step b) includes the composite microporous membranes (120) formed on both surfaces of the spacer (200); and
c) stacking and combining an electrode sheet (110) on one surface of the second unit (20), wherein the electrode sheet (110) comprises a current collector (111) and a carbon electrode layer (112) formed on at least one surface of the current collector (111),
wherein a composite microporous membrane (120)of the second unit (20) is stacked on and compressed onto the carbon electrode layer (112).

2. The manufacturing method according to claim 1, wherein, in the step b), the second unit (20) is prepared by stacking and compressing the composite microporous membrane (120), prepared in the step a), on and onto one surface of the spacer (200).

3. The manufacturing method according to claim 1, wherein, in the step a), the composite microporous membranes (120) are prepared by dipping the microporous membranes (121) unwound from microporous membrane winding rolls (41, 42) into ion exchange resin dissolving tanks (50) configured to contain an ion exchange resin solution (51) therein so as to be impregnated with the ion exchange resin solution (51, 52).

4. The manufacturing method according to claim 1, wherein the composite microporous membranes (120) are configured such that an ion exchange resin of the ion exchange resin layers (122) formed on both surfaces of the microporous membranes (121) permeates into pores in the microporous membranes (121) so as to connect the ion exchange resin layers (122) formed on both surfaces of the microporous membranes (121) to each other through the pores.

5. The manufacturing method according to claim 1, further comprising the step of:
drying a product prepared in a previous step, after the step a).

6. The manufacturing method according to claim 1, wherein the microporous membranes (121) are polyolefin-based, cellulose-based or organic and inorganic hybrid microporous membranes (121).

7. The manufacturing method according to claim 6, wherein the polyolefin-based microporous membranes comprise at least two selected from the group consisting of high-density polyethylene, linear low-density polyethylene, low-density polyethylene, ultra-high-molecular-weight polyethylene, polypropylene and derivatives thereof.

8. The manufacturing method according to claim 1, wherein:
the microporous membranes have a thickness of 1 to 500 µm; and
the microporous membranes have a porosity of 10 to 95 and a pore size of 0.01 to 50 µm, and are prepared in a fibrous form or a membrane form.

## Patentansprüche

1. Herstellungsverfahren für eine zusammengesetzte kapazitive Deionisationselektrode, wobei das Herstellungsverfahren die folgenden Schritte umfasst:
a) Herstellen zusammengesetzter mikroporöser Membranen (120) durch Ausbilden von Ionenaustauscherharzschichten (122) auf Flächen von mikroporösen Membranen (121), wobei jede zusammengesetzte mikroporöse Membran (120) eine erste Ionenaustauscherharzschicht (122) und eine zweite Ionenaustauscherharzschicht (122) umfasst, die auf jeweils einer der beiden Flächen der mikroporösen Membranen (121) ausgebildet sind, wobei die erste Ionenaustauscherharzschicht (122) und die zweite Ionenaustauscherharzschicht (122) gleich oder verschieden sind;
b) Herstellen einer zweiten Einheit (20), die die zusammengesetzte mikroporöse Membran (120) und einen Abstandshalter (200) umfasst, indem man die in Schritt a) hergestellte zusammengesetzte mikroporöse Membran (120) auf einer Fläche des Abstandshalters (200) ausbildet, wobei die in Schritt b) hergestellte zweite Einheit (20) die auf beiden Flächen des Abstandshalters (200) ausgebildeten zusammengesetzten mikroporösen Membranen (120) umfasst; und
c) Aufstapeln und Kombinieren eines Elektrodenblatts (110) auf einer Fläche der zweiten Einheit (20), wobei das Elektrodenblatt (110) einen Stromabnehmer (111) und eine auf wenigstens einer Fläche des Stromabnehmers (111) ausgebildete Kohlenstoffelektrodenschicht (112) umfasst,
wobei eine zusammengesetzte mikroporöse Membran (120) der zweiten Einheit (20) auf die Kohlenstoffelektrodenschicht (112) aufgestapelt und daraufgepresst wird.

2. Herstellungsverfahren gemäß Anspruch 1, wobei in Schritt b) die zweite Einheit (20) dadurch hergestellt wird, dass man die in Schritt a) hergestellte zusammengesetzte mikroporöse Membran (120) auf die Fläche des Abstandshalters (200) aufstapelt und darauf presst.

3. Herstellungsverfahren gemäß Anspruch 1, wobei in Schritt a) die zusammengesetzten mikroporösen Membranen (120) dadurch hergestellt werden, dass man die von Wickelrollen für mikroporöse Membranen (41, 42) abgewickelten mikroporösen Membranen (121) in Ionenaustauscherharz-Auflösungsbecken (50) eintaucht, die so konfiguriert sind, dass sie eine Ionenaustauscherharzlösung (51) enthalten, so dass die Membranen mit der Ionenaustauscherharzlösung (51, 52) imprägniert werden.

4. Herstellungsverfahren gemäß Anspruch 1, wobei die zusammengesetzten mikroporösen Membranen (120) so konfiguriert sind, dass ein Ionenaustauscherharz der auf beiden Flächen der mikroporösen Membranen (121) ausgebildeten Ionenaustauscherharzschichten (122) so in Poren in den mikroporösen Membranen (121) eindringt, dass sich die auf beiden Flächen der mikroporösen Membranen (121) ausgebildeten Ionenaustauscherharzschichten (122) durch die Poren hindurch miteinander verbinden.

5. Herstellungsverfahren gemäß Anspruch 1, das weiterhin den folgenden Schritt umfasst:
Trocknen eines in einem früheren Schritt nach Schritt a) hergestellten Produkts.

6. Herstellungsverfahren gemäß Anspruch 1, wobei es sich bei den mikroporösen Membranen (121) um solche auf Polyolefinbasis, auf Cellulosebasis oder um organisch-anorganische hybride Membranen handelt.

7. Herstellungsverfahren gemäß Anspruch 6, wobei die mikroporösen Membranen auf Polyolefinbasis wenigstens zwei umfassen, die aus der Gruppe ausgewählt sind, welche aus Polyethylen hoher Dichte, linearem Polyethylen geringer Dichte, Polyethylen geringer Dichte, Polyethylen mit ultrahohem Molekulargewicht, Polypropylen und Derivaten davon besteht.

8. Herstellungsverfahren gemäß Anspruch 1, wobei:
die mikroporösen Membranen eine Dicke von 1 bis 500 µm aufweisen; und
die mikroporösen Membranen eine Porosität von 10 bis 95 und eine Porengröße von 0,01 bis 50 µm aufweisen und in Faserform oder Membranform hergestellt werden.

## Revendications

1. Procédé de fabrication d'une électrode de déionisation capacitive composite, le procédé de fabrication comprenant les étapes consistant à :
a) préparer des membranes microporeuses composites (120) en formant des couches de résine échangeuse d'ions (122) sur des surfaces de membranes microporeuses (121), où chaque membrane microporeuse composite (120) comprend une première couche de résine échangeuse d'ions (122) et une seconde couche de résine échangeuse d'ions (122) formées respectivement sur les deux surfaces des membranes microporeuses (121), où la première couche de résine échangeuse d'ions (122) et la seconde couche de résine échangeuse d'ions (122) sont identiques l'une à l'autre ou différentes l'une de l'autre ;
b) préparer une deuxième unité (20) comprenant les membranes microporeuses composites (120) et un espaceur (200) en formant la membrane microporeuse composite (120), préparée à l'étape a), sur une surface de l'espaceur (200), dans laquelle la deuxième unité (20) préparée à l'étape b) comprend les membranes microporeuses composites (120) formées sur les deux surfaces de l'espaceur (200) ; et
c) empiler et combiner une feuille d'électrode (110) sur une surface de la deuxième unité (20), la feuille d'électrode (110) comprenant un collecteur de courant (111) et une couche d'électrode en carbone (112) formée sur au moins une surface du collecteur de courant (111),
dans lequel une membrane microporeuse composite (120) de la deuxième unité (20) est empilée et comprimée sur la couche d'électrode en carbone (112).

2. Procédé de fabrication selon la revendication 1, dans lequel à l'étape b), la deuxième unité (20) est préparée en empilant et en comprimant la membrane microporeuse composite (120), préparée à l'étape a), sur une surface de l'espaceur (200).

3. Procédé de fabrication selon la revendication 1, dans lequel à l'étape a), les membranes microporeuses composites (120) sont préparées en plongeant les membranes microporeuses (121) déroulées des rouleaux d'enroulement de membrane microporeuse (41, 42) dans des réservoirs de dissolution de résine échangeuse d'ions (50) configurés pour contenir une solution de résine échangeuse d'ions (51) de manière à être imprégnés de la solution de résine échangeuse d'ions (51, 52).

4. Procédé de fabrication selon la revendication 1, dans lequel les membranes microporeuses composites (120) sont configurées de telle sorte qu'une résine échangeuse d'ions des couches de résine échangeuse d'ions (122) formées sur les deux surfaces des membranes microporeuses (121) pénètre dans les pores des membranes microporeuses (121) de manière à connecter les couches de résine échangeuse d'ions (122) formées sur les deux surfaces des membranes microporeuses (121) l'une à l'autre à travers les pores.

5. Procédé de fabrication selon la revendication 1, comprenant en outre l'étape consistant à :
sécher un produit préparé dans une étape précédente, après l'étape a).

6. Procédé de fabrication selon la revendication 1, dans lequel les membranes microporeuses (121) sont des membranes microporeuses à base de polyoléfine, de cellulose ou hybrides organiques et inorganiques (121).

7. Procédé de fabrication selon la revendication 6, dans lequel les membranes microporeuses à base de polyoléfine comprennent au moins deux éléments choisis dans le groupe constitué par le polyéthylène haute densité, le polyéthylène basse densité linéaire, le polyéthylène basse densité, le polyéthylène à poids moléculaire ultra élevé, le polypropylène et leurs dérivés.

8. Procédé de fabrication selon la revendication 1, dans lequel :
les membranes microporeuses ont une épaisseur de 1 à 500 µm ; et
les membranes microporeuses ont une porosité de 10 à 95 et une taille de pores de 0,01 à 50 µm, et sont préparées sous une forme fibreuse ou sous une forme membranaire.
